# EUROPEAN PATENT APPLICATION

(11) **EP 2 602 290 A1**
(43) Date of publication of application: **12.06.2013**
(21) Application number: 11192848.7
(22) Date of filing: 09.12.2011
(51) Int. Cl.: C08L 95/00

(54) **Asphalt compositions having a low bitumen content**

(71) Applicant: Landa, Paul Adrianus, 4851 TL Ulvenhout (NL); Jeeninga, Anne Kees, 8489 KR Slijkenburg (NL)
(72) Inventor: Landa, Paul Adrianus, 4851 TL Ulvenhout (NL); Jeeninga, Anne Kees, 8489 KR Slijkenburg (NL)
(74) Representative: Ketelaars, Maarten F.J.M.

(57) **Abstract**

The present invention relates to asphalt compositions comprising a bitumen composition having a penetration in the range of about 10 to about 350 10⁻¹ mm at 25°C according to ASTM D5, aggregate material and a boiled vegetable oil, wherein the amount of the boiled vegetable oil is between about 0.01 to about 0.15 wt.%, based on the total weight of the bitumen composition and the aggregate material. These asphalt compositions are very useful in asphalt road construction.

## Description

### Summary of the invention

The present invention relates to asphalt compositions having a low bitumen content and to a method for preparing such asphalt compositions. These asphalt compositions are very useful in asphalt road construction, in particular in very open asphalt road construction.

### Background of the invention

Common asphalt compositions comprise bitumen, a polymer (frequently an elastomer) and optionally other components like cross-linking agents, fluxing oils and rejuvenating agents (e.g. vegetable oils and natural rosins). Roads constructed with such compositions need after a certain period of time, e.g. about ten to fifteen years, maintenance. This maintenance can include repair works wherein patches of old asphalt are replaced by new material or wherein a new top layer is laid upon the road. Frequently, old asphalt top layers are first removed by milling wherein the milled material is reused in the preparation of new asphalt compositions. However, materials obtained from such old asphalt top layers have deteriorated properties, mainly due to ageing of the bitumen, which *inter alia* influence production of the new asphalt compositions and their processing.

For example, asphalt compositions comprising aged bitumen (which basically corresponds to lower bitumen contents) are more difficult to process since compaction requires more energy. Accordingly, manufacturing and processing such asphalt compositions usually require higher temperatures in order to keep the asphalt composition processable. Moreover, lower bitumen contents in asphalt compositions lead to different physical properties which do not meet the required European standards, in particular NEN-EN 12697-23 ("Bituminous mixtures - Test methods for hot mix asphalt - Part 23: Determination of the indirect tensile strength of bituminous specimens"), NEN-EN 12697-24 ("Bituminous mixtures - Test methods for hot mix asphalt - Part 24: Resistance to fatigue"), NEN-EN 12697-25 ("Bituminous mixtures - Test methods for hot mix asphalt - Part 25: Cyclic compression test") and NEN-EN 12697-26 ("Bituminous mixtures - Test methods for hot mix asphalt - Part 26: Stiffness"). Not meeting these standard European requirements often leads to an increased water sensitivity, a higher stiffness of the asphalt composition which is, when applied to a road, more vulnerable to surface cracking, and a reduced fatigue resistance which reduces life time.

JP 01-121367 A, incorporated by reference, discloses a bituminous emulsion comprising (a1) bitumen and 1 - 20 wt.% linseed oil, and (a2) 10 - 40 wt.%, based on (a1), of a solvent mixture consisting of 85 - 97 wt.% of a crude oil based solvent (e.g. kerosene) and 3 - 15 wt.% of a vegetable oil (e.g. turpentine oil), and (b) an aqueous portion comprising 0.1 - 3 wt.% of a cationic emulsifier. The bituminous emulsion is used for paving.

US 6.824.326, incorporated by reference, discloses a load bearing composition comprising a structural material and 4 - 20 % wt. of a polymerised, i.e. cross-linked, vegetable oil, based on the total weight of the structural material. The structural material may be silt, clay, gravel, soil, sand, bitumen or concrete. The vegetable oil may be rapeseed oil, palm oil, linseed oil, olive oil, canola oil, sunflower oil, soybean oil, corn oil or other vegetable oils. Example 1 discloses construction blocks which are manufactured by mixing sand and 5 wt.% soybean oil or canola oil at ambient temperature followed by curing the mixture at 100° - 400°C for 15 minutes to 12 hours in a mould. Examples 2 and 3 disclose materials which are manufactured by mixing sand and 5 wt.% soybean oil at a temperature of 150° to 200°C for 15 minutes followed by curing at ambient temperature for two to eighteen weeks. Provisional examples 4 and 5 disclose mixtures of bitumen and any vegetable oil.

US 7.008.670, incorporated by reference, discloses a method for rejuvenating bituminous surfaces comprising heating the bituminous surface in place and rejuvenating the heated surface with a bituminous composition comprising a mixture of bitumen and soybean oil or alkyl esters of soybean oil.

US 7.811.372, incorporated by reference, discloses a process for recycling an asphalt pavement comprising heating and milling the asphalt pavement to produce a milled asphalt pavement, heating a rejuvenating agent comprising palm oil and bitumen and adding this rejuvenating agent to the milled asphalt pavement to produce a rejuvenated asphalt mixture and forming a rejuvenated asphalt pavement from this rejuvenated asphalt mixture.

However, crude oil based solvents and vegetable esters are not desired because of their volatility which implies a burden to the environment and form a healthy risk to the workers.

### Summary of the invention

The present invention relates to an asphalt composition comprising a bitumen composition having a penetration in the range of about 10 to about 350 10⁻¹ mm at 25°C according to ASTM D5, aggregate material and a boiled vegetable oil, wherein the amount of the boiled vegetable oil is between about 0.01 to about 0.15 wt.%, based on the total weight of the bitumen composition and the aggregate material.

The present invention further relates to a method for preparing an asphalt composition comprising the steps of:
(a) mixing aggregate material and a boiled vegetable oil; and
(b) mixing the mixture obtained in step (a) with a bitumen composition;
wherein the amount of the boiled vegetable oil is between about 0.01 to about 0.15 wt.%, based on the total weight of the bitumen composition and the aggregate material, and wherein the bitumen composition has a penetration in the range of about 10 to about 350 10⁻¹ mm at 25°C according to ASTM D5.

### Detailed description of the invention

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The term "boiled vegetable oil" usually means a product that is obtained by oxidative polymerisation of vegetable oils. They are sometimes also referred to as "blown vegetable oils". Similar products are so-called "stand oils" which are manufactured by non-oxidative polymerisation of vegetable oils, wherein metal salts (often referred to as "siccatives") are employed as catalysts. In this document, the term "boiled vegetable oil" is to be understood as to encompass "boiled oils", "blown oils" and "stand oils". All these types of oils are usually manufactured to viscosity specifications, colour specifications, acidity (i.e. free fatty acid content), and the like. The kinematic viscosity can for example be determined by using an Ubbelohde viscometer according to ASTM D 445 or its equivalent BS 188. The dynamic or absolute viscosity can be calculated from kinematic viscosity data by multiplying the latter by the density (cf. T. Gallagher, D.E. Kline, J. Am. Oil. Chem. Soc. 54, 68 - 70, 1977; incorporated by reference). The viscosity of these products may vary from about 0.1 to about 1600 Pa.s at 20°C.

According to the present invention, it is preferred that the amount of the boiled vegetable oil is between about 0.05 to about 0.12 wt.%, based on the total weight of the bitumen composition and the aggregate material. More preferably, the amount of the boiled vegetable oil is between about 0.1 to about 0.10 wt.%, based on the total weight of the bitumen composition and the aggregate material.

The bitumen composition in the asphalt composition has preferably a penetration in the range of about 20 to about 300 10⁻¹ mm at 25°C according to ASTM D5, more preferably a penetration in the range of about 20 to about 250 10⁻¹ mm at 25°C.

It is furthermore preferred that the bitumen composition has a ring & ball softening point at 25°C in the range of about 5°C to about 70°C according to ASTM D36.

According to the present invention, it is preferred that the total amount of the bitumen composition in the asphalt composition is about 1 to about 15.0 wt.%, more preferably about 1.5 to about 12.5 wt.%, and most preferably about 2.0 to about 10.0 wt. %.

According to the present invention, the source for the bitumen in the asphalt composition is preferably selected from virgin bitumen, recycled bitumen (i.e. bitumen from reclaimed asphalt; cf. European Asphalt Pavement Association, "Arguments to stimulate the government to promote asphalt reuse and recycling", EAPA Position Paper, May 2008) and mixtures thereof. Virgin bitumen are manufactured in a wide variety of penetrations, i.e. about 10 to about 350 10⁻¹ mm at 25°C. Recycled bitumen have often higher values for penetration and are usually considered "hard bitumen". Although there is no definition for the penetration of hard bitumen, they have usually a penetration of 40 10⁻¹ mm or less at 25°C.

Preferably, the source for the recycled bitumen is recycled asphalt or roofing coverings. Whereas recycled asphalt comprises about 1 wt.% to about 15 wt.% of bitumen, roofing coverings comprise about 40 wt.% to about 80 wt.% of bitumen, the remainder being fillers.

According to a first preferred embodiment, the bitumen composition in the asphalt composition according to the present invention, wherein the respective amounts add up to 100 %, is as follows:

| Virgin bitumen | Bitumen from roofing coverings | Bitumen from recycled asphalt |
|---|---|---|
| 0%-30% | 5% - 15 wt.% | 65 % - 85 wt.% |

According to this first embodiment, the bitumen composition may for example consist of 0 % virgin bitumen, 15 % of bitumen from roofing coverings and 85 % of bitumen from recycled asphalt. According to an other example of this first preferred embodiment, the bitumen composition may consist of 10 % virgin bitumen, 5 % of bitumen from roofing coverings and 85 % of bitumen from recycled asphalt. According to yet another example of this first preferred embodiment, the bitumen composition may consist of 30 wt.% virgin bitumen, 5 % of bitumen from roofing coverings and 65 % of bitumen from recycled asphalt.

According to a second preferred embodiment, the bitumen composition in the asphalt composition according to the present invention, wherein the respective amounts add up to 100 % is as follows:

| Virgin bitumen | Bitumen from roofing coverings | Bitumen from recycled asphalt |
|---|---|---|
| 5 - 30 wt.% | 5%-15% | 65%-80% |

According to this second preferred embodiment, the bitumen composition may for example consist of 5 % virgin bitumen, 15 % of bitumen from roofing coverings and 80 % of bitumen from recycled asphalt. According to an other example of this second preferred embodiment, the bitumen composition may consist of 15 % virgin bitumen, 5 % of bitumen from roofing coverings and 80 % of bitumen from recycled asphalt. According to yet another example of this second preferred embodiment, the bitumen composition may consist of 30 % virgin bitumen, 5 % of bitumen from roofing coverings and 65 % of bitumen from recycled asphalt.

According to the present invention, it is preferred that the boiled vegetable oil has a dynamic viscosity of about 0.1 to about 1600 Pa.s at 20°C. More preferably, the dynamic viscosity is about 0.1 to about 1000 Pa.s, even more preferably about 0.1 to about 100 Pa. s.

Preferably, the vegetable oil is selected from the group consisting of linseed oil, soybean oil, sunflower oil and safflower oil. The most preferred oil of natural origin is linseed oil.

The asphalt composition according to the present invention is very useful in road construction and road repair. The asphalt composition is particular suitable for repairing asphalt concrete base course and asphalt concrete binder course (in Dutch known as "STAB") and asphalt surface course (in Dutch known as "DAB").

### Example

An asphalt composition was manufactured by conventional methods according to the following recipe:

| | Amount |
|---|---|
| | (wt.%) |
| Course aggregate (grade 4/22)¹ | 30 |
| Fine aggregate (grade 0/4) | 15 |
| Filler (fly ash) | 2 |
| Recyled asphalt² | 50 |
| Virgin bitumen³ | 3 |
| Boiled linseed oil⁴ | 0.06 |

| | |
|---|---|
| ¹ The grade of aggregate materials is determined according to European standard NEN-EN 13043 and is expressed in d/D mm; a d/D of 4/22 means a course granulate. ² Bitumen content is 5 wt.%; penetration: 20 10⁻¹ mm at 25°C according to ASTM D5. ³ Penetration: 40 10⁻¹ mm at 25°C according to ASTM D5. ⁴ Dynamic viscosity: 5000 mPa.s at 20°C; boiling point > 300°C. | |

Target size distribution of the aggregate material according to NEN-EN 13043

| Sieve size (mm) | Total percentage passing |
|---|---|
| C 31.5 | 100 |
| 2 | 41.1 |
| 0.063 | 89.9 |

Results were as follows:
NEN EN 12697-24: resistance to fatigue: 107 µm/mm.
NEN EN 12697-26: stiffness: 7824 mPa.
NEN EN 12697-12: Water sensitivity (measured by the Indirect Tensile Strength Ratio - ITSR): > 80%.

## Claims

1. Asphalt composition comprising a bitumen composition having a penetration in the range of about 10 to about 350 10⁻¹ mm at 25°C according to ASTM D5, aggregate material and a boiled vegetable oil, wherein the amount of the boiled vegetable oil is between about 0.01 to about 0.15 wt.%, based on the total weight of the bitumen composition and the aggregate material.

2. Asphalt composition according to Claim 1, wherein the total amount of the bitumen composition in the asphalt composition is about 1 to about 15 wt.%.

3. Asphalt composition according to Claim 1 or Claim 2, wherein the source for the bitumen is selected from virgin bitumen, recycled bitumen and mixtures thereof.

4. Asphalt composition according to any one of Claims 1 - 3, wherein the source for the recycled bitumen is recycled asphalt or roofing coverings.

5. Asphalt composition according to any one of Claims 2 - 4, wherein the amount of virgin bitumen in the bitumen composition is about 5 % to about 30 wt.%.

6. Asphalt composition according to Claim 4, wherein the amount of bitumen originating from roofing coverings in the bitumen composition is about 5 % to about 15 %.

7. Asphalt composition according to any one of Claims 1 - 6, wherein the boiled vegetable oil has a dynamic viscosity of about 0.1 to about 1600 Pa.s at 20°C.

8. Asphalt composition according to any one of Claims 1 - 7, wherein the vegetable oil is selected from the group consisting of linseed oil, soybean oil, sunflower oil and safflower oil. The most preferred oil of natural origin is linseed oil.

9. Method for preparing an asphalt composition comprising the steps of:
(a) mixing aggregate material and a boiled vegetable oil; and
(b) mixing the mixture obtained in step (a) with the bitumen composition; wherein the amount of the boiled vegetable oil is between about 0.01 to about 0.15 wt.%, based on the total weight of the bitumen composition and the aggregate material, and wherein the bitumen composition have a penetration in the range of about 10 to about 350 10⁻¹ mm at 25°C according to ASTM D5.
